# EUROPEAN PATENT APPLICATION

(11) **EP 1 950 180 A1**
(43) Date of publication of application: **30.07.2008**
(21) Application number: 07101188.6
(22) Date of filing: 25.01.2007
(51) Int. Cl.: C02F 1/52, C02F 1/56, C02F 11/14, E21B 21/06

(54) **Chemical composition and process for treating liquid dispersions**

(71) Applicant: GEO - Ground Engineering Operations Produtos e Solucoes de Engenharia e Geotecnia, Lda, 2770-071 Paco de Arcos (PT)
(72) Inventor: Bostyn, Arnaud R.W., 1180 Brussels (BE); Capitao-Mor da Costa e Silva, Jorge, 1990-238 Lisboa (PT)
(74) Representative: Leherte, Georges M.L.M.

(57) **Abstract**

The invention relates to a dispersing agent composition and to a process for treating dispersions of one or more species of solid and/or liquid particles in a liquid medium in order to separate at least part of said species of solid and/or liquid particles from said liquid medium or from the remainder of said dispersion, comprising adding a dispersing agent composition to said dispersion and submitting the dispersion to a settling and/or physical separation step, wherein said dispersing agent composition comprises one or more polymers / copolymers of at least one species selected from acrylic acid, succinic acid, succinic acid oligomers, acrylamide, maleic anhydride, aspartic acid, polyaspartates and sulfonated organic compounds.

## Description

The invention relates to the area of handling / treating dispersions, in particular in view of separating undesirable fractions of dispersed materials from such dispersions.

Such separation techniques are particularly useful, as for instance in the case of soil stabilization slurries.

When performing soil drilling, such as for foundations, including piles, for supporting a building, bridge or port, and more generally when a bored hole is drilled through soil, these bored holes need to be stabilized during the process of excavation, until the proper depth is achieved. In soft soils, a soil stabilizer prevents sloughing or even total collapse of the excavation. There are several stabilizers that can be used, such as drilling fluids, casings (steel tube), etc.

When the bored hole reaches the intended depth, a rebar cage is set in place. Concrete is than poured, and the drilling fluid is recovered and reused for subsequent excavation operations.

A similar process is used for diaphragm wall constructions, amongst others for tunneling purposes or just for construction of building basements in poor soils.

Also the drilling of holes for the oil industry requires slurry fluids, for side wall containment.

In the process of drilling a hole in the ground to a given diameter and depth, of placing rebar cages and of afterward pouring concrete, one can thus use stabilizing fluids while drilling. One of the common stabilizing / drilling fluids generally used is bentonite (i.e. a mineral, processed clay, treated with chemical components). While the drilling progresses there is a tendency for solids to become suspended by the bentonite fluid. These solids do not settle easily through time. When the desired depth is achieved the bentonite fluid must be cleaned and a part of the solids must be removed. Generally no more than 5% of particles (sand) are allowed to contaminate the fluid prior to placing concrete.

Depending on the volume of bentonite to be treated and depth this process either requires a down hole pump or airlifting to recuperate the fluid to be cleaned while recycled cleaned bentonite is being fed to the hole. The procedure up to now includes a complex device (de-sanding unit) that mechanically removes solids in suspension. This process generally requires 30 minutes to 3 hours but it can take up to 5 hours and more, depending on the soil.

For the state of the art in this respect reference can for instance be given to patent documents GB 1 399 938 and WO 2002/092259.

To understand the stabilizing mechanism of bentonite, one may visualize it as a set of magnetized bricks with a positive and a negative charge on the opposite side. These platelets, with the initial bleeding, tend to accumulate on the interface of the excavation's walls in an organized way, forming a barrier known as "cake". This barrier is created due to the dual charged platelets referred to above, which allows them to connect to each other and also because they are bigger than the soil particles. These platelets also work as a fluid loss reduction mechanism by covering the voids in the soil of the excavation. The cake is also the "vehicle" for hydrostatic pressure transfer to the interface of the excavation's walls. From this point on, the excavation is stabilized.

The devices used in industry to clean the bentonite are either hydrocyclones or shakers with screens or a combination of both.

Shakers remove suspended particles (residual solids that remain in suspension from the cuttings while drilling) and separate the liquid (fine clayey particles and water) by use of the screens. These devices require electric power and for huge jobs some of these high powered equipments use a lot of energy that keep adding up to the job cost.

Hydrocyclones basically centrifuge the liquid forcing the solids (heavier particles than bentonite itself) to separate. Some jobs or contractors may choose a combination of both methods.

Whatever method practiced, the removal of contaminating solids from stabilizing / drilling fluids, is currently a time consuming and costly process.

The objective of the present invention is to provide alternative methods for separating undesirable contaminants from drilling fluids, which alternative methods avoid capital intensive separation installations and allow a more easy and otherwise more convenient separation.

In view of this objective the invention provides a new process for treating dispersions of one or more species of solid and/or liquid particles in a liquid medium in order to separate at least part of said species of solid and/or liquid particles from said liquid medium or from the remainder of said dispersion, comprising adding a dispersing agent composition to said dispersion and submitting the dispersion to a settling and/or physical separation step, where said dispersing agent composition comprises one or more ingredients selected from acrylic acid, acrylamide, succinic acid, succinic acid oligomers, maleic anhydride, aspartic acid, polyaspartates, sulfonated organic compounds, polyacrylic acid (PAA) and their Na, K, NH₄- and amine salts, polymaleic acid and their salts, polymaleates, polyphosphonates, sodiumhexametaphosphate, tetrasodiumpyrophospate, tetrapotassiumpolyphosphate, phosphoric acid esters and lignin sulfonate, acrylate polymers, amines, amine acetates, carboxymethyl cellulose, EO/PO block copolymers, ethoxylated nonionic compounds, gelatin whey, lecithin, lignite, melamine sulfonate condensates, naphthalene sulfonate condensates, nitrocellulose, polyepoxysuccinic acid, phosphino carboxylic acids, phosphonate compounds, carboxyl and amine dimmer based polyamides, polyvinyl alcohol, sodium maleate, sodium silicates, styrene-acrylic compounds, sulfonated styrene maleic anhydride, (modified) tall oil and terpene-phenolic compounds, as monomers, oligomers, polymers and/or copolymers.

In a preferred approach of the process according to the invention, the dispersing agent composition in particular comprises one or more polymers or copolymers of at least one species selected from acrylic acid, succinic acid, succinic acid oligomers, acrylamide, maleic anhydride and sulfonated organic compounds.

In a further preferred approach of the process according to the invention the dispersing agent composition most suitably comprises one or more copolymers of at least one species (A) selected from acrylic acid, succinic acid, succinic acid oligomers, acrylamide, maleic anhydride, aspartic acid, polyaspartates and sulfonated organic compounds, copolymerized with at least one species (B) selected from polyacrylic acid (PAA) and their Na, K, NH₄- and amine salts, polymaleic acid and their salts, polymaleates, polyphosphonates, sodiumhexametaphosphate, tetrasodiumpyrophospate, tetrapotassiumpolyphosphate, phosphoric acid esters and lignin sulfonate, acrylate polymers, amines, amine acetates, carboxymethyl cellulose, EO/PO block copolymers, ethoxylated nonionic compounds, gelatin whey, lecithin, lignite, maleic anhydrides, melamine sulfonate condensates, naphthalene sulfonate condensates, nitrocellulose, polyepoxysuccinic acid, phosphino carboxylic acids, phosphonate compounds, carboxyl and amine dimmer based polyamides, polyvinyl alcohol, sodium maleate, sodium silicates, styrene-acrylic compounds, sulfonated styrene maleic anhydride, (modified) tall oil, terpene-phenolic compounds.

In this embodiment of the invention said species (B) may most preferably be selected from polyacrylic acid (PAA) and their Na, K, NH₄- and amine salts, polymaleic acid and their salts, polymaleates, polyphosphonates, succinic acid, succinic acid oligomers, sodiumhexametaphosphate, tetrasodiumpyrophospate, tetrapotassiumpolyphosphate, phosphoric acid esters and lignin sulfonate.

According to a further feature of the process according to the invention, the preferred oligomers, polymers and/or copolymers used in the dispersing agent compositions have an average mass ranging from 500 to 300.000 g/mol, preferably from 1000 to 50.000 g/mol (depending on the specific polymers involved).

The process may, in accordance with one embodiment of the invention, be applied to separate part of the suspended particles from the remainder of the dispersion.

In such an embodiment of the invention, the dispersion agent composition is most appropriately added to said dispersion in a ratio of 0,1 to 4 liter of dispersion agent composition / m³ of dispersion, whereas the mixture of the dispersion and the dispersion agent composition is submitted to a settling / separation step for a period of 1 minute to 5 days (preferably 5 minutes to 1 day, most preferably 5 minutes to 60 minutes), and part of said species of solid and/or liquid particles are separated from the remainder of said dispersion.

According to a preferred feature of this embodiment of the invention, the dispersion most suitably consists of a geotechnical slurry, selected from
bentonite slurries,
polymer slurries, and
mixed bentonite / polymer slurries,
comprising contaminating solid particles, whereas at least a substantial part said contaminating solid particles are separated from said geotechnical slurry.

According to this embodiment of the invention the "separating product" (i.e. the dispersing agent composition) is added to the drilling / stabilization slurry (bentonite), generally in a container or excavation, and the drilling / stabilization slurry is put into agitation for a short period (preferably no longer than 5 minutes). After the fluid has remained static for a period of approximately 1 to 40 minutes the solids and fines in suspension will by means of chemistry and gravity weight settle to the bottom, rendering a clean fluid that is ready to be used again.

A secondary approach is to add the product directly to the stabilizations slurry before the excavation process initiates. Once the drilling or excavation stops all the solids in suspension will settle to the bottom in 1 to 40 minutes, rendering a clean fluid. This fluid may afterwards be recuperated to be used again.

With the new process according to the invention for cleaning bentonite using said dispersing agent composition, no special equipment will be needed.

The application of the dispersing agent composition will replace the de-sand equipment (hydrocyclones and shakers with screens).

The procedure for drilling or excavating a diaphragm wall requires a fluid for soil stabilization and a rig that actually cuts the soil. While drilling cuttings tend to become suspended in the fluid, bentonite has a characteristic called thixotropy that enables itself to easily suspend particles. After the excavation has been successfully achieved the fluid must be cleaned out to meet the contractual specifications. This generally requires down-hole pumps or airlift systems in the excavations in order to retrieve and replace bentonite making it to pass through the hydrocyclones and shakers with screens. Afterwards a reinforcement cage is introduced in the excavation. Once this is completed a "tremmie" (smaller diameter pipe than the excavation itself) is inserted in the column through the fluid all the way to the bottom. Concrete will be poured through this tremmie directly to the bottom. Given the differences between densities of concrete and the slurry the latter will be displaced (this is one of the reasons the fluid must be cleaned out) and may be pumped back to the mixing / storage plant for reconditioning and reuse on the following excavation.

The process may also, in accordance with another embodiment of the invention, be applied to separate essentially all solids from said dispersion.

In such embodiment of the invention, the dispersion agent composition is most appropriately added to said dispersion in a ratio of at least 4 liter of dispersion agent composition / m³ of dispersion, whereas the mixture of dispersion and dispersion agent composition is submitted to a settling / separation step for a period of 1 minute to 5 days, preferably 5 minutes to 1 day, most preferably 5 - 60 minutes, and essentially all of said solid species are separated from said dispersion.

According to a preferred feature of this embodiment of the invention, the dispersion most suitably consists of a geotechnical slurry, selected from
bentonite slurries, and
mixed bentonite / polymer slurries,
comprising contaminating solid particles, whereas at least a substantial part of said contaminating solid particles and said bentonite particles are separated from said liquid medium or from a resulting polymer dispersion.

Bentonite nowadays tends to be considered an hazard for the environment and most countries are adopting legislation for its disposal during and after the works have been completed. During its manufacture some chemicals are added to it. These chemicals together with fact that bentonite produces cake do not allow life to grow once thrown to the environment. Most sites that accept dumping materials refuse bentonite.

When bentonite is no longer needed as a fluid to stabilize the soil, it is transported from the job site to a proper place where it can be disposed of. Due to environment restrictions, most places don't accept bentonite and don't know how to eliminate it.

In accordance with the present embodiment of the invention, the dispersing agent composition will have the effect of settling all the suspending materials on the bottom of the tank or any convenient reservoir. This operation can take from 5 minutes to 5 days, depending on the soil and formula of the applied dispersing agent composition. At the end of this operation the tank will have a column of common and clean water that can be dumped without any kind of special treatment and a lay of clay will be at the bottom of the tank. This small amount of clay can now be transported to a proper site and be dumped there.

This process will reduce dramatically costs of bentonite elimination. The price for bentonite elimination is calculated by its cubic meter.

The invention also specifically relates to dispersing agent compositions for treating dispersions of one or more species of solid and/or liquid particles in a liquid medium in order to separate at least part of said species of solid and/or liquid particles from said liquid medium or from the remainder of said dispersion, by adding said dispersing agent composition to said dispersion and submitting the dispersion to a settling and/or physical separation step, wherein said dispersing agent composition comprises one or more ingredients selected from acrylic acid, acrylamide, succinic acid, succinic acid oligomers, maleic anhydride, aspartic acid, polyaspartates, sulfonated organic compounds, polyacrylic acid (PAA) and their Na, K, NH₄- and amine salts, polymaleic acid and their salts, polymaleates, polyphosphonates, sodiumhexametaphosphate, tetrasodiumpyrophospate, tetrapotassiumpolyphosphate, phosphoric acid esters and lignin sulfonate, acrylate polymers, amines, amine acetates, carboxymethyl cellulose, EO/PO block copolymers, ethoxylated nonionic compounds, gelatin whey, lecithin, lignite, melamine sulfonate condensates, naphthalene sulfonate condensates, nitrocellulose, polyepoxysuccinic acid, phosphino carboxylic acids, phosphonate compounds, carboxyl and amine dimmer based polyamides, polyvinyl alcohol, sodium maleate, sodium silicates, styrene-acrylic compoundss, sulfonated styrene maleic anhydride, (modified) tall oil and terpene-phenolic compounds, as monomers, oligomers, polymers and/or copolymers.

In a preferred embodiment of the dispersing agent composition according to the invention, the composition comprises one or more polymers or copolymers of at least one species selected from acrylic acid, succinic acid, succinic acid oligomers, acrylamide, maleic anhydride and sulfonated organic compounds.

In a further preferred embodiment of the dispersing agent composition according to the invention, the composition comprises one or more copolymers of at least one species (A) selected from acrylic acid, succinic acid, succinic acid oligomers, acrylamide, maleic anhydride, aspartic acid, polyaspartates, and sulfonated organic compounds, copolymerized with at least one species (B) selected from polyacrylic acid (PAA) and their Na, K, NH₄- and amine salts, polymaleic acid and their salts, polymaleates, polyphosphonates, sodiumhexametaphosphate, tetrasodiumpyrophospate, tetrapotassiumpolyphosphate, phosphoric acid esters and lignin sulfonate, acrylate polymers, amines, amine acetates, carboxymethyl cellulose, EO/PO block copolymers, ethoxylated nonionic compounds, gelatin whey, lecithin, lignite, maleic anhydrides, melamine sulfonate condensates, naphthalene sulfonate condensates, nitrocellulose, polyepoxysuccinic acid, phosphino carboxylic acids, phosphonate compounds, carboxyl and amine dimmer based polyamides, polyvinyl alcohol, sodium maleate, sodium silicates, styrene-acrylic compoundss, sulfonated styrene maleic anhydride, (modified) tall oil, terpene-phenolic compounds.

According to this embodiment said species (B) are/is most preferably selected from polyacrylic acid (PAA) and their Na, K, NH₄- and amine salts, polymaleic acid and their salts, polymaleates, polyphosphonates, succinic acid, succinic acid oligomers, sodiumhexametaphosphate, tetrasodiumpyrophospate, tetrapotassiumpolyphosphate, phosphoric acid esters and lignin sulfonate.

According to a further feature of the invention, the preferred oligomers, polymers and/or copolymers for the dispersing agent compositions have an average mass ranging from 500 to 300.000 g/mol, preferably from 1000 to 50.000 g/mol (depending on the specific polymers involved).

The dispersing agent compositions according to the invention have preferably a total dry matter content ranging from 50 - 950 g/l, more preferably from 300 - 800 g/l.
It must however be understood that more diluted embodiments of the dispersing agent compositions according to the invention are also possible but will require larger amounts (relative to the treated liquid slurries) for implementing the processes according to the invention.

The invention also specifically covers the dispersing agent composition as such when intended for use in a process as disclosed here above and in the claims here below.

Further details of the invention will become apparent from the following non limiting examples.

### Examples 1 - 8

### Examples of a dispersing agent composition

### Example 1 :

An aqueous solution of 500 g/l diphosphoric acid - tetrapotassium salt, as a clear, homogeneous solution, constituted a suitable dispersing agent composition in accordance to the invention.

### Example 2 :

Adding a 50% solution of a chelating / complexing agent selected from nitrilotriacetic acid and dieththylenetriamine pentaacetic acid, to a solution according to example 1 (in an approximately equal amounts) provided an appropriate dispersing agent composition in accordance to the invention.

### Example 3 :

130 g of NaOH were added to 500 g of a 50% mixture of "medium molecular weight" polyacrylic acid (~ 4000 g/mol average molar mass) in water, such as SOKALAN CP 10 S from BASF, SOKALAN PA 20 PN from BASF or DISPEX R.50 from CIBA (corresponding products also are available fromROHM & HAAS, NOVEON, ...).

This provided a very good dispersing agent composition according to the invention.

### Example 4 :

Different quantities of the composition of example 3 were combined to the solution of example 1, all yielding very suitable dispersing agent compositions according to the invention.

### Example 5 :

Several commercial phosphonate compositions, such as in particular those of the DEQUEST 2000-, 20010-, 2050-, 2060-, 2090-, 3000-, 4000-, 7000-, FS-, P-, PB, SPE- and TURPINAL series, were found to constitute convenient dispersing agent compositions according to the invention.

### Example 6 :

Adding polyvinylpyrolidone or Mg Cloride or Zn Chloride, in amounts of 5 - 50 g/l, to the composition according to example 3, yielded dispersing agent compositions, according to the invention, with 'boosted' properties.

### Example 7 :

Using various polyacrylic acids with average molecular weights in the range from 500 - 300.000, instead of the polyacrylic acid used in example 3 provided further useful dispersing agent compositions according to the invention.

### Example 8 :

By replacing, in example 3, the polyacrylic acid by a polyaspartate composition resulting from the heating of aspartic acid at 180° C (essentially polysuccinimide and water) and its subsequent neutralization with Na OH at 60 °C), other suitable dispersing agent compositions according to the invention were obtained.

### Example 9

### Application of a dispersing agent composition to a contaminated bentonite slurry :

Foundation works were being executed for a building construction on a site at Coimbra. This particular job involved the execution of a diaphragm wall with 400 mm in width and panels (sections of the wall) reaching 30 meters in depth. For the excavation a rig equipped with a mechanical grab removed soil as bentonite was being pumped directly at the excavation for soil stabilization purposes. The slurry supplied to the excavation from a batching plant had the following properties: pH values of 9, viscosity value measurements between (API Marsh funnel) 38 to 45 seconds and specific weights ranging from 1, 04 to 1, 08 grams per cubic 3. After the geometry of the panel was completed the slurry had a content of 10 % of sand, resulting from suspended cuttings from the excavation process. This sand content was 7% in excess of what was acceptable by the job specifications.

At this stage 3 liters of the dispersing agent composition of example 3 per m³ of existent slurry volume were added directly at the mouth of the panel. The grab served as means of agitation of the fluid for rapid distribution.

After 5 minutes the grab removed all settlement at the bottom of the panel and immediately after that sand content values were taken from
the bottom (35 meters)
the middle (20 meters), and
the top (5 meters) of the excavation.
All values showed that the sand content was less than 0, 25%; viscosity values remained as they were in the batching plant, as well as pH and specific weight.

On this job 12 panels with depths in excess of 25 meter followed this procedure.

This process was repeated at eight different sites with radically different geologies, with 5 different types of bentonite.

The applicable concentrations of dispersing agent composition to be added to a volume of bentonite slurry to be treated are stated in table I here below

**Table I**

| **Using varying amounts of dispersing agent composition** | | |
|---|---|---|
| Amount of dispersing agent composition (liters per m³) | Waiting time to achieve sand contents less than 1 % | Bentonite separation or degratation |
| 1 | 15 minutes to 4 hours | doest not occur |
| 1,5 | 15 minutes to 3hours | does not occur |
| 2 | 5 minutes to 2 hours | does not occur |
| 3 | 5 minutes to 45 minutes | does not occur |
| 4 | less than 30 minutes | does not occur |

The treated bentonite was submitted to a Filter Press Test before and after treatment to check weather the slurry could still develop a filter cake and maintain operable characteristics to be re-used for a subsequent excavation, still in conditions for soil stabilization.

Both tests showed no behavioral changes in the bentonite throughout 10 consecutive iterations before and after treatment. Cake measurements showed the same thickness values and filtration ("bleeding") measurements showed the same values.

### Example 10

### Application of a dispersing agent composition to contaminated polymer based slurries

Application of a dispersing agent composition according to example 3 to polymer based slurries resulted in complete separation of solids from the polymer fluid. The polymer itself was not affected, whatever the chosen concentration. The chains of polymer were not affected. Thus we may conclude that the product can be used to rapid settlement of cuttings in suspension but it does not separate the polymer itself from the water. When bentonite is included in the slurry the effect of the dispersing agent composition will still be maintained as described in the above example and with the same concentrations, leaving the polymer unaffected.

Consistent testing has been performed in various types of bentonite fluids with specific weights that ranged from 1, 01 gr/cm3 to 1, 40 gr/cm3. The addition of the dispersing agent composition concentrations of 5 to 10 liters per m3 of volume to be treated allowed to drop down suspended particles immediately and reduce fluid specific weight to half in the following 30 minutes. In 3 to 5 days complete separation of solids from water occurred and settled to the bottom of the reservoir in an extreme compacted fashion.

The recovered water was tested in a Portuguese governmental approved institute that proved the water to be non hazard and able to be disposed without environmental concerns. Smaller concentrations of dispersing agent compositions will deliver results, but waiting times will generally be prolonged.

Further adaptation of the main formulation of the dispersing agent composition to the specific soil contaminants and the bentonite fluid slurries result in more rapid separation of the fluid (separation times ranging from 5 minutes to 5 days).

## Claims

1. Process for treating dispersions of one or more species of solid and/or liquid particles in a liquid medium in order to separate at least part of said species of solid and/or liquid particles from said liquid medium or from the remainder of said dispersion, comprising adding a dispersing agent composition to said dispersion and submitting the dispersion to a settling and/or physical separation step, **characterised in that** said dispersing agent composition comprises one or more ingredients selected from acrylic acid, acrylamide, succinic acid, succinic acid oligomers, maleic anhydride, aspartic acid, polyaspartates, sulfonated organic compounds, polyacrylic acid (PAA) and their Na, K, NH₄- and amine salts, polymaleic acid and their salts, polymaleates, polyphosphonates, sodiumhexametaphosphate, tetrasodiumpyrophospate, tetrapotassiumpolyphosphate, phosphoric acid esters and lignin sulfonate, acrylate polymers, amines, amine acetates, carboxymethyl cellulose, EO/PO block copolymers, ethoxylated nonionic compounds, gelatin whey, lecithin, lignite, melamine sulfonate condensates, naphthalene sulfonate condensates, nitrocellulose, polyepoxysuccinic acid, phosphino carboxylic acids, phosphonate compounds, carboxyl and amine dimmer based polyamides, polyvinyl alcohol, sodium maleate, sodium silicates, styrene-acrylic compoundss, sulfonated styrene maleic anhydride, (modified) tall oil and terpene-phenolic compounds, as monomers, oligomers, polymers and/or copolymers.

2. Process according to claim 1, **characterised in that** said dispersing agent composition comprises one or more polymers / copolymers of at least one species selected from acrylic acid, succinic acid, succinic acid oligomers, acrylamide, maleic anhydride and sulfonated organic compounds.

3. Process according to claim 1, **characterised in that** said dispersing agent composition comprises one or more copolymers of at least one species (A) selected from acrylic acid, succinic acid, succinic acid oligomers, acrylamide, maleic anhydride, aspartic acid, polyaspartates, and sulfonated organic compounds, copolymerized with at least one species (B) selected from polyacrylic acid (PAA) and their Na, K, NH₄- and amine salts, polymaleic acid and their salts, polymaleates, polyphosphonates, sodiumhexametaphosphate, tetrasodiumpyrophospate, tetrapotassiumpolyphosphate, phosphoric acid esters and lignin sulfonate, acrylate polymers, amines, amine acetates, carboxymethyl cellulose, EO/PO block copolymers, ethoxylated nonionic compounds, gelatin whey, lecithin, lignite, maleic anhydrides, melamine sulfonate condensates, naphthalene sulfonate condensates, nitrocellulose, polyepoxysuccinic acid, phosphino carboxylic acids, phosphonate compounds, carboxyl and amine dimmer based polyamides, polyvinyl alcohol, (modified) rosin esters, Rosin resonates, rosin salts, sodium maleate, sodium silicates, styrene-acrylic compoundss, sulfonated styrene maleic anhydride, (modified) tall oil, terpene-phenolic compounds.

4. Process according to claim 3, **characterised in that** said species (B) are/is selected from polyacrylic acid (PAA) and their Na, K, NH₄- and amine salts, polymaleic acid and their salts, polymaleates, polyphosphonates, succinic acid, succinic acid oligomers, sodiumhexametaphosphate, tetrasodiumpyrophospate, tetrapotassiumpolyphosphate, phosphoric acid esters and lignin sulfonate.

5. Process according to any one of claims 1-4, **characterized in that** said oligomers, polymers or copolymers have an average mass ranging from 500 to 300.000 g/mol, preferably from 1000 to 50.000 g/mol.

6. Process according to any one of claims 1-5, **characterised in that** said dispersion agent composition is added to said dispersion in a ratio of 0,1 to 4 liter of dispersion agent composition / m³ of dispersion, **in that** the mixture of dispersion and dispersion agent composition is submitted to a settling / separation step for a period of 1 minute to 5 days, preferably 5 minutes to 1 day, most preferably 5 - 60 minutes, and **in that** part of said species of solid and/or liquid particles are separated from the remainder of said dispersion.

7. Process according to any one of claims 1-6, **characterised in that** said dispersion consists of a geotechnical slurry, selected from
bentonite slurries,
polymer slurries, and
mixed bentonite / polymer slurries
comprising contaminating solid particles, and **in that** at least a substantial part said contaminating solid particles are separated from said geotechnical slurry.

8. Process according to any one of claims 1-5, **characterised in that** said dispersing agent composition is added to said dispersion in a ratio of at least 4 liter of dispersion agent composition / m³ of dispersion, **in that** the mixture of dispersion and dispersion agent composition is submitted to a settling / separation step for a period of 1 minute to 5 days, preferably 5 minutes to 1 day, most preferably 5 - 60 minutes, **and in that** essentially all species of solid liquid particles are separated from said liquid medium.

9. Process according to any one of claims 1-5 and 8, **characterised in that** said dispersion consists of a geotechnical slurry, selected from
bentonite slurries,
mixed bentonite / polymer slurries
comprising contaminating solid particles, and **in that** at least a substantial part of said contaminating solid particles and said bentonite particles are separated from said liquid medium or from a resulting polymer dispersion.

10. Dispersing agent composition for treating dispersions of one or more species of solid and/or liquid particles in a liquid medium in order to separate at least part of said species of solid and/or liquid particles from said liquid medium or from the remainder of said dispersion, by adding said dispersing agent composition to said dispersion and submitting the dispersion to a settling and/or physical separation step, **characterised in that** said dispersing agent composition comprises one or more ingredients selected from acrylic acid, acrylamide, succinic acid, succinic acid oligomers, maleic anhydride, aspartic acid, polyaspartates, sulfonated organic compounds, polyacrylic acid (PAA) and their Na, K, NH₄- and amine salts, polymaleic acid and their salts, polymaleates, polyphosphonates, sodiumhexametaphosphate, tetrasodiumpyrophospate, tetrapotassiumpolyphosphate, phosphoric acid esters and lignin sulfonate, acrylate polymers, amines, amine acetates, carboxymethyl cellulose, EO/PO block copolymers, ethoxylated nonionic compounds, gelatin whey, lecithin, lignite, melamine sulfonate condensates, naphthalene sulfonate condensates, nitrocellulose, polyepoxysuccinic acid, phosphino carboxylic acids, phosphonate compounds, carboxyl and amine dimmer based polyamides, polyvinyl alcohol, sodium maleate, sodium silicates, styrene-acrylic compoundss, sulfonated styrene maleic anhydride, (modified) tall oil and terpene-phenolic compounds, as monomers, oligomers, polymers and/or copolymers.

11. Dispersing agent composition according to claim 10, **characterised in that** said dispersing agent composition comprises one or more polymers or copolymers of at least one species selected from acrylic acid, succinic acid, succinic acid oligomers, acrylamide, maleic anhydride and sulfonated organic compounds.

12. Dispersing agent composition according to claim 10, **characterised in that** said dispersing agent composition comprises one or more copolymers of at least one species (A) selected from acrylic acid, succinic acid, succinic acid oligomers, acrylamide, maleic anhydride, aspartic acid, aspartates and sulfonated organic compounds, copolymerized with at least one species (B) selected from polyacrylic acid (PAA) and their Na, K, NH₄- and amine salts, polymaleic acid and their salts, polymaleates, polyphosphonates, sodiumhexametaphosphate, tetrasodiumpyrophospate, tetrapotassiumpolyphosphate, phosphoric acid esters and lignin sulfonate, acrylate polymers, amines, amine acetates, carboxymethyl cellulose, EO/PO block copolymers, ethoxylated nonionic compounds, gelatin whey, lecithin, lignite, maleic anhydrides, melamine sulfonate condensates, naphthalene sulfonate condensates, nitrocellulose, polyepoxysuccinic acid, phosphino carboxylic acids, phosphonate compounds, carboxyl and amine dimmer based polyamides, polyvinyl alcohol, sodium maleate, sodium silicates, styrene-acrylic compoundss, sulfonated styrene maleic anhydride, (modified) tall oil, terpene-phenolic compounds.

13. Dispersing agent composition according to claim 12, **characterised in that** said species (B) are/is selected from polyacrylic acid (PAA) and their Na, K, NH₄- and amine salts, polymaleic acid and their salts, polymaleates, polyphosphonates, succinic acid, succinic acid oligomers, sodiumhexametaphosphate, tetrasodiumpyrophospate, tetrapotassiumpolyphosphate, phosphoric acid esters and lignin sulfonate.

14. Dispersing agent composition according to any one of claims 10-13, **characterized in that** said oligomers, polymers or copolymers have an average mass ranging from 500 to 300.000 g/mol, preferably from 1000 to 50.000 g/mol.

15. Dispersing agent composition according to any one of claims 10-13, for use in a process according to any one of claims 1-9.
